# FASCICULE DE BREVET EUROPEEN

(11) **EP 0 406 033 B1**
(45) Date de publication et mention de la délivrance du brevet: **14.04.1993**
(21) Numéro de dépôt: 90401256.4
(22) Date de dépôt: 11.05.1990
(51) Int. Cl.: B60T 13/567

(54) **Servomoteur d'assistance au freinage**
Bremskraftverstärker
Servo-unit for brakes

(30) Priorité: 15.06.1989 FR 8907982
(43) Date de publication de la demande: 02.01.1991
(73) Titulaire: ALLIEDSIGNAL EUROPE SERVICES TECHNIQUES, 93700 Drancy (FR)
(72) Inventeur: Meynier, Guy, Bendix Europe Services Techniques, F-93700 Drancy (FR)

(56) Documents cités:
- GB-A- 1 100 380
- GB-A- 1 161 989
- GB-A- 2 079 390

## Description

La présente invention concerne les servomoteurs pneumatiques d'assistance au freinage, du type comprenant un boîtier formé de deux demi-coquilles avant et arrière, une structure de piston divisant intérieurement le boîtier en deux chambres, constituée d'un ensemble d'un plateau et d'une membrane et comprenant centralement une structure de moyeu abritant un moyen de valve de distribution, actionnable par un organe d'entrée pour créer sélectivement une différence de pression entre les chambres, le moyen de valve comportant un plongeur monté à coulissement axial dans un alésage central du corps de valve et reliée à l'organe d'entrée, le plongeur définissant à une de ses extrémités un premier siège de clapet, un second siège de clapet étant formé dans le corps de valve concentriquement au premier siège de clapet et un moyen de clapet monté dans le corps de valve et sollicité élastiquement vers les premier et second sièges de clapet, au moins un moyen élastique sollicitant axialement l'organe d'entrée en éloignement des sièges de clapet.

Les servomoteurs de ce type sont bien connus dans l'art antérieur.

Dans les servomoteurs pneumatiques d'assistance classiques, la structure de moyeu est constituée d'une pièce massive monobloc abritant le moyen de valve de distribution et dont une partie tubulaire s'étend vers l'arrière à l'extérieur du boîtier, de façon à recevoir une tige d'entrée destinée à être reliée à une pédale de freinage.

Cet agencement classique fonctionne de façon satisfaisante. Cependant, une telle conception présente différents inconvénients. Tout d'abord, la présence de la "cheminée" arrière contribue à alourdir le servomoteur, alors que les constructeurs cherchent à alléger au maximum le poids des véhicules automobiles. De plus, cette cheminée donne au servomoteur un encombrement important, alors que l'espace disponible dans le compartiment moteur se trouve de plus en plus réduit. Enfin, les constructeurs désirent automatiser le plus possible l'assemblage des véhicules automobiles. Différentes solutions ont ainsi été proposée, pour le montage robotisé, par le compartiment moteur, de servomoteurs présentant une cheminée, mais elles exigent la plupart du temps un prépositionnement d'une précision supérieure aux performances actuelles des robots de montage.

On connaît du document GB-A-2 079 390 un servomoteur du type rappelé ci-dessus, dans lequel un tube de renfort n'étend axialement à travers le boîtier et relie les demi-coquilles avant et arrière. Le moyen de valve est disposé dans un logement situé à l'intérieur de ce tube de renfort, de façon à réduire l'encombrement axial du servomoteur.

La présente invention a pour objet de proposer un servomoteur pneumatique du type défini généralement plus haut, de conception allégée, robuste, de faible coût de fabrication, d'encombrement réduit et permettant un montage automatisé sur un véhicule automobile sans requérir du robot de montage une précision élevée.

Pour ce faire, selon une caractéristique de l'invention, la structure de moyeu et le moyeu de valve sont disposés à l'intérieur du boîtier. On obtient ainsi un servomoteur ne présentant plus de cheminée sur la partie arrière du boîtier, d'où un poids et un encombrement réduit.

Selon une caractéristique plus particulière de l'invention, la demi-coquille arrière du servomoteur comporte une partie d'assemblage s'étendant vers l'arrière et destinée à la fixation du servomoteur sur le tablier d'un véhicule automobile. De façon avantageuse, cette partie de montage coopère avec des fentes ou glissières formées sur le tablier du véhicule.

Avec un tel agencement, le montage du servomoteur, éventuellement équipé d'un maître-cylindre et d'un réservoir de liquide de frein, peut s'effectuer latéralement.

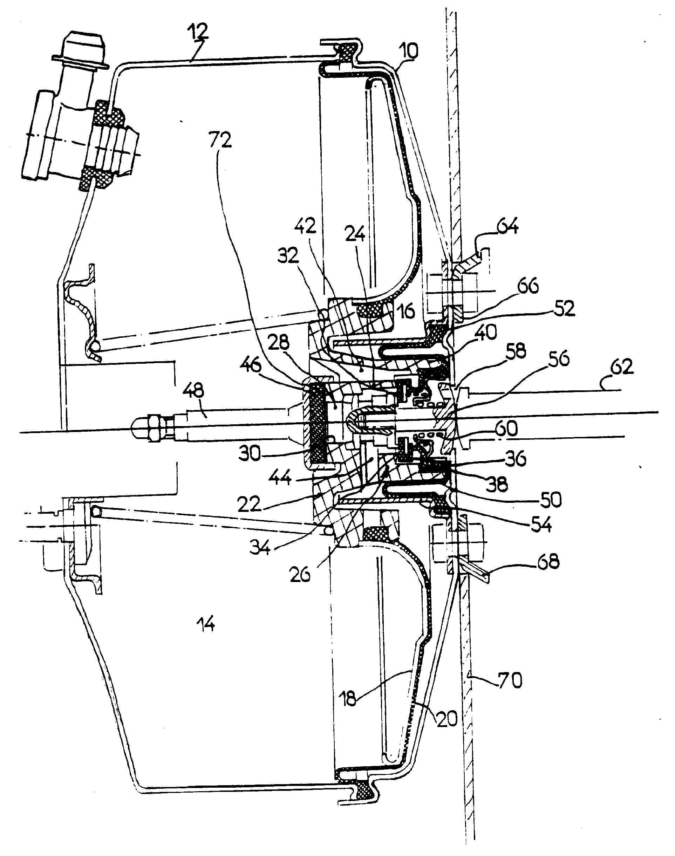

D'autres caractéristiques et avantages de la présente invention ressortiront de la description suivante d'un mode de réalisation, donné à titre illustratif mais nullement limitatif, faite en relation avec le dessin annexé, sur lequel :
- la Figure unique est une vue en coupe longitudinale d'un servomoteur pneumatique d'assistance au freinage selon l'invention.

Dans la description qui va suivre, on appellera par convention "arrière" du servomoteur la direction vers laquelle les éléments mobiles se déplacent pour occuper leur position de repos, et "avant" la direction dans laquelle les éléments mobiles sont déplacés lors de leur actionnement. L'arrière du servomoteur est ainsi représenté sur la partie droite de la Figure, l'avant se trouvant à gauche.

Sur la Figure unique on a représenté en coupe un servomoteur pneumatique d'assistance au freinage du type à dépression comprenant un boîtier, formé d'une demi-coquille arrière 10, et d'une demi-coquille avant 12 divisé intérieurement en une chambre avant, ou chambre à dépression 14, et une chambre arrière, ou chambre de travail 16, par une structure de piston mobile constituée d'un ensemble d'un plateau 18 et d'une membrane souple 20 dont la périphérie est prise entre les deux demi-coquilles du boîtier. Le plateau 18 comprend une partie centrale 22 définissant une structure de moyeu 24 abritant un moyen de valve de distribution, désigné dans son ensemble par la référence 26. Le moyen de valve comprend un plongeur de valve 28, couplé à un organe d'entrée du servomoteur, destinée à être actionné par une pédale de freinage, comme il sera décrit par la suite. Le plongeur de valve 28 est monté à coulissement dans un alésage étagé 30 formé dans la partie centrale 22 du plateau 18. L'extrémité arrière du plongeur de valve 28 forme un premier siège de clapet 32 concentrique à un second siège de clapet 34 formé par la partie centrale 22, ces deux sièges de clapet étant destinés à coopérer avec un élément de clapet 36 sollicité élastiquement dans la direction des sièges de clapet. Dans le mode de réalisation représenté, l'élément de clapet 36 comprend une partie périphérique ou bourrelet de montage 38 emmanché et maintenu dans un prolongement tubulaire 40 s'étendant vers l'arrière de la partie centrale 22. Cette dernière comprend, par exemple au voisinage de sa périphérie, au moins un passage axial 42 établissant la communication entre la chambre de dépression 14 et l'élément de clapet 36, et un passage radial 44 établissant la communication entre la chambre de travail 16 et l'élément de clapet 36. Un disque de réaction 46 est interposé entre l'extrémité arrière d'une tige de sortie 48 du servomoteur (destinée à être couplée à un piston d'un maître-cylindre, non représenté), d'une part, et la face frontale du plongeur de valve 28 et une surface annulaire frontale 72 de la partie centrale 22 du plateau 18, d'autre part.

Conformément à l'invention, la structure de moyeu et le moyen de valve sont disposés à l'intérieur du boîtier, et plus précisément à l'intérieur de la partie tubulaire 40, s'étendant vers l'arrière, de la partie centrale 22, cette partie tubulaire 40 étant elle-même entièrement disposée à l'intérieur du boîtier du servomoteur, comme on peut le voir sur la Figure.

Dans un mode avantageux de réalisation de l'invention l'élément de clapet 36 est prolongé, au-delà du bourrelet formant partie de montage 38, par une partie périphérique 50, elle-même terminée par une partie 52, par exemple en forme de bourrelet, engageant de façon étanche la demi-coquille arrière. La partie périphérique 50 entoure la partie tubulaire 40, et peut avantageusement venir reposer à l'intérieur d'une partie tubulaire 54 solidaire de la demi-coquille arrière du servomoteur et s'étendant vers l'avant. L'étanchéité pourra être avantageusement assurée à la jonction de la demi-coquille arrière et de la partie tubulaire 54 par la partie 52. De la sorte, la chambre de travail arrière 16 du servomoteur se trouve délimitée par la membrane 20 associée au plateau 18, par la demi-coquille arrière 10 et par la partie périphérique 50 de l'élément de clapet 36.

Le plongeur de valve 28 peut être relié à un organe d'entrée 56, dont la partie arrière s'étend radialement vers l'extérieur, et, en position de repos, vient en butée contre la demi-coquille arrière, la partie arrière de l'organe d'entrée 56 étant d'un diamètre supérieur à celui d'une ouverture 58 pratiquée dans la demi-coquille arrière.

Dans le mode de réalisation représenté, un ressort 60 de rappel de l'organe d'entrée 56 prend appui, d'une part sur le support en tôle de montage de l'élément de clapet 36 dans l'élément tubulaire 40 et d'autre part sur la face avant de la partie arrière de l'organe d'entrée 56.

On notera que, conformément aux objets de l'invention, le servomoteur se présente sous une forme compacte puisqu'il ne possède plus de cheminée arrière, ce qui contribue à le rendre plus léger et moins encombrant.

Le fonctionnement d'un tel servomoteur est classique et ne sera pas décrit ici, l'actionnement du servomoteur étant provoqué par une tige 62, elle-même actionnée par une pédale de freinage (non représenté).

Le servomoteur peut être fixé sur le véhicule par tout moyen approprié, mais de façon avantageuse, il est prévu de munir la demi-coquille arrière d'une partie d'assemblage 64. Cette partie d'assemblage peut prendre la forme de pattes débordant vers l'arrière ou d'une collerette annulaire comportant une partie 66 de fixation à l'extérieur de la demi-coquille arrière et une partie tronconique 68.

La partie d'assemblage 64 est alors prévue pour coopérer avec des glissières ou des fentes ménagées sur le tablier 70 du véhicule, de façon à ce que le servomoteur puisse être mis en place sur ce tablier par translation perpendiculairement à son axe. L'extrémité des fentes ou glissières sera alors conformée de façon connue pour bloquer le servomoteur lorsqu'il atteint la position correcte et le maintenir dans cette position.

Le servomoteur pourra alors être actionné par la tige 62, avantageusement sous forme de poussoir, supporté en translation axiale par un élément solidaire du tablier 70, et lui-même actionné par une pédale de frein. L'extrémité avant du poussoir et l'extrémité arrière de l'organe d'entrée sont sensiblement de forme sphérique et de convexités tournées l'une vers l'autre de façon à ne pas perturber le mouvement de translation lors du montage.

On a ainsi réalisé un servomoteur dont le montage sur véhicule peut être facilement automatisé, le robot de montage n'ayant à effectuer que les seules opérations de saisir le servomoteur et de le pousser latéralement dans les fentes ou glissières prévues sur le tablier du véhicule jusqu'à ce qu'il se trouve à fond de course. Le servomoteur se trouvera alors bloqué en position, l'organe d'entrée 56 étant disposé devant la tige 62 d'actionnement.

## Revendications

1. Servomoteur pneumatique d'assistance au freinage comprenant un boîtier formé de deux demi-coquilles avant (12) et arrière (10), une structure de piston divisant intérieurement le boîtier en deux chambres, constituée d'un ensemble d'un plateau (18) et d'une membrane (20) et comprenant centralement une structure de moyeu (24) abritant un moyen de valve (26) de distribution actionnable par un organe d'entrée (56) pour créer sélectivement une différence de pression entre les chambres, le moyen de valve (26) comportant un plongeur (28) monté à coulissement axial dans un alésage central coaxial (30) du corps de valve et relié à l'organe d'entrée (56), le plongeur (28) définissant à une de ses extrémités un premier siège (32) de clapet, un second siège de clapet (34) étant formé dans le corps de valve concentriquement au premier siège de clapet, et un moyen de clapet (36) monté dans le corps de valve et sollicite élastiquement vers les premier et second sièges de clapet, au moins un moyen élastique (60) sollicitant axialement l'organe d'entrée en éloignement des sièges de clapet, la structure de moyeu (24) et le moyen de valve (26) étant disposés à l'intérieur du boîtier, l'élément de clapet (36) comprenant une partie de montage (38) engageant de façon étanche la structure de moyeu (24), le dit servomoteur étant caractérisé en ce que la partie de montage (38) est prolongée par une partie périphérique qui s'étend à l'extérieur d'une partie tubulaire (40), s'étendant vers l'arrière, de la partie centrale (22) du plateau, et à l'intérieur d'une partie tubulaire (54), s'étendant vers l'avant, de la demi-coquille arrière (10), et, qui engage de façon étanche la demi-coquille arrière (10).

2. Servomoteur selon la revendication 1, caractérisé en ce que l'organe d'entrée (56) comporte une partie arrière s'étendant radialement vers l'extérieur et venant en butée, en position de repos, contre la demi-coquille arrière (10).

3. Servomoteur selon la revendication 2, caractérisé en ce que la partie arrière de l'organe d'entrée (56) a une forme sensiblement sphérique, dont la convexité est dirigée vers l'arrière du servomoteur.

4. Servomoteur selon la revendication 1, caractérisé en ce que la demi-coquille arrière (10) comporte une partie d'assemblage (64) s'étendant vers l'arrière et destinée à la fixation du servomoteur sur le tablier (70) d'un véhicule automobile.

5. Servomoteur selon la revendication 4, caractérisé en ce que la partie d'assemblage coopère avec des fetes ou des glissières formées sur le tablier (70) du véhicule.

6. Servomoteur selon l'une quelconque des revendications précédentes, caractérisé en ce qu'il est monté latéralement sur le tablier (70) d'un véhicule.

7. Véhicule automobile, caractérisé en ce qu'il est équipé d'un servomoteur conforme à l'une quelconque des revendications précédentes.

## Patentansprüche

1. Pneumatischer Bremskraftverstärker mit einem Gehäuse, das aus einer vorderen (12) und einer hinteren (10) Halbschale gebildet ist, wobei das Gehäuse im Inneren in zwei Kammern durch eine Kolbenstruktur unterteilt ist, die aus einer Anordnung aus einer Platte (18) und einer Membran (20) besteht und zentral eine Nabenstruktur (24) aufweist, die eine Verteilerventileinrichtung (26) aufnimmt, die durch ein Eingangsorgan (56) betätigt werden kann, um selektiv eine Druckdifferenz zwischen den Kammern zu schaffen, wobei die Ventileinrichtung (26) einen Ventilkolben (28) aufweist, der axial gleitend in einer koaxialen, zentralen Bohrung (30) des Ventilkörpers gelagert und mit dem Eingangsorgan (56) verbunden ist, wobei der Ventilkolben (28) an einem seiner Enden einen ersten Ventilsitz (32) bildet, ein zweiter Ventilsitz (34) in dem Ventilkörper konzentrisch zu dem ersten Ventilsitz ausgebildet ist und eine Sperrventileinrichtung (36) in dem Ventilkörper montiert und elastisch auf den ersten und den zweiten Ventilsitz hin vorgespannt ist, wobei wenigstens eine elastische Einrichtung (60) das Eingangsorgan in Abstand von den Ventilsitzen vorspannt, die Nabenstruktur (24) und die Ventileinrichtung (26) im Inneren des Gehäuses vorgesehen sind und das Sperrventilelement (36) einen Montageteil (38) aufweist, der dichtend an der Nabenstruktur (24) eingreift, wobei der Bremskraftverstärker dadurch gekennzeichnet ist, daß der Montageteil (38) durch einen Umfangsteil verlängert ist, der sich von einem sich nach hinten erstreckenden rohrförmigen Teil (40) des zentralen Teils (22) der Platte nach außen und in das Innere eines sich nach vorne erstreckenden rohrförmigen Teils (54) der hinteren Halbschale (10) erstreckt und dichtend an der hinteren Halbschale (10) angreift.

2. Bremskraftverstärker nach Anspruch 1, dadurch gekennzeichnet, daß das Eingangsorgan (56) einen hinteren Teil aufweist, der sich radial nach außen erstreckt und in der Ruhestellung gegen die hintere Halbschale (10) anliegt.

3. Bremskraftverstärker nach Anspruch 2, dadurch gekennzeichnet, daß der hintere Teil des Eingangsorgans (56) einem im wesentlichen kugelförmige Form aufweist, deren konvexe Krümmung zu dem hinteren Teil des Bremskraftverstärkers gerichtet ist.

4. Bremskraftverstärker nach Anspruch 1, dadurch gekennzeichnet, daß die hintere Halbschale (10) einen Montageteil (64) aufweist, der sich nach hinten erstreckt und zur Befestigung des Bremskraftverstärkers an der Schürze (70) eines Automobils bestimmt ist.

5. Bremskraftverstärker nach Anspruch 4, dadurch gekennzeichnet, daß der Montageteil mit Schlitzen oder Gleitführungen zusammenwirkt, die an der Schürze (70) des Fahrzeugs ausgebildet sind.

6. Bremskraftverstärker nach einem der vorhergehenden Ansprüche, dadurch gekennzeichnet, daß er seitlich an der Schürze (70) eines Fahrzeugs montiert ist.

7. Automobil, dadurch gekennzeichnet, daß es mit einem Bremskraftverstärker nach einem der vorhergehenden Ansprüche ausgestattet ist.

## Claims

1. Pneumatic brake-booster comprising a housing formed from two front and rear half-shells (12, 10), a piston structure dividing the housing internally into two chambers and composed of an assembly consisting of a plate (18) and of a diaphragm (20) and possessing centrally a hub structure (24) containing a distribution valve means (26) actuatable by an input member (56) in order to generate a pressure difference selectively between the chambers, the valve means (26) comprising a plunger (28) mounted axially slideably in a coaxial central bore (30) of the valve body and connected to the input member (56), the plunger (28) defining a first shutter seat (32) at one of its ends, a second shutter seat (34) being formed in the valve body concentrically relative to the first shutter seat and a shutter means (36) mounted in the valve body and stressed elastically towards the first and second shutter seats, at least one elastic means (60) stressing the input member axially away from the shutter seats, the hub structure (24) and the valve means (26) being arranged inside the housing, the shutter element (36) possessing an assembly part (38) engaging the hub structure (24) sealingly, the said brake-booster being characterized in that the assembly part (38) is extended by a peripheral part which extends on the outside of a rearwardly extending tubular part (40) of the central part (22) of the plate and on the inside of a forwardly extending tubular part (54) of the rear half-shell (10), and which engages the rear half-shell (10) sealingly.

2. Booster according to Claim 1, characterized in that the input member (56) has a rear part extending radially outwards and, in the rest position, coming up against the rear half-shell (10).

3. Booster according to Claim 2, characterized in that the rear part of the input member (56) has a substantially spherical form, the convexity of which is directed towards the rear of the booster.

4. Booster according to Claim 1, characterized in that the rear half-shell (10) possesses an assembly part (64) extending rearwards and intended for fastening the booster to the sill (70) of a motor vehicle.

5. Booster according to Claim 4, characterized in that the assembly part interacts with slots or slideways formed on the sill (70) of the vehicle.

6. Booster according to any of the preceding claims, characterized in that it is mounted laterally on the sill (70) of a vehicle.

7. Motor vehicle, characterized in that it is equipped with a booster according to any of the preceding claims.
